Europäisches Patentamt

European Patent Office

Office européen des brevets

(19)

(11) Veröffentlichungsnummer: **0 029 540**
**B1**

(12) **EUROPÄISCHE PATENTSCHRIFT**

(45) Veröffentlichungstag der Patentschrift:
31.07.85

(51) Int. Cl.⁴: **B 01 D 13/02**

(21) Anmeldenummer: **80106902.2**

(22) Anmeldetag: **08.11.80**

(54) **Elektrodialyse-Zellpaket.**

(30) Priorität: **16.11.79 DE 2946284**

(43) Veröffentlichungstag der Anmeldung:
**03.06.81 Patentblatt 81/22**

(45) Bekanntmachung des Hinweises auf die Patenterteilung:
**31.07.85 Patentblatt 85/31**

(84) Benannte Vertragsstaaten:
**AT BE CH DE FR GB IT LI LU NL SE**

(56) Entgegenhaltungen:
**FR - A - 1 270 379**
**FR - A - 1 445 634**
**FR - A - 1 551 453**
**FR - A - 2 070 975**
**FR - A - 2 206 110**
**GB - A - 860 468**
**GB - A - 1 013 464**

(73) Patentinhaber: **Forschungsinstitut Berghof GmbH, Berghof, D-7400 Tübingen (DE)**

(72) Erfinder: **Schmoldt, Harm, Stadtbahnstrasse 106, D-2000 Hamburg 65 (DE)**
Erfinder: **Kock, Klaus, Dr., Ob dem Himmelreich 4, D-7400 Tübingen (DE)**
Erfinder: **Strathmann, Heiner, Dr., Milanweg 15, D-7400 Tübingen (DE)**

(74) Vertreter: **Boeters, Hans Dietrich, Dr. et al, Boeters, Bauer & Partner Thomas-Wimmer-Ring 14, D-8000 München 22 (DE)**

## Beschreibung

Bei der Entsalzung von ionogenen Lösungen mit Hilfe der Elektrodialyse werden Kationen- und Anionen-Austauschermembranen in alternierender Reihenfolge zwischen zwei Elektroden so angeordnet, daß sich zwischen den Membranen jeweils abgeschlossene Kammern ausbilden. Durch Anlegen eines elektrischen Feldes zwischen den Elektroden wandern die Anionen in Richtung zur Anode und die Kationen in Richtung der Kathode. Dabei können die Anionen die positiv geladene Anionenaustauschermembran passieren, werden aber von der Kationenaustauschermembran zurückgehalten. Die zur Kathode wandernden Kationen passieren die negativ geladene Kationenaustauschermembran, werden aber von der Anionenaustauschermembran zurückgehalten. Hierdurch ergeben sich alternierend Kammern, in denen eine Salzanreicherung und ein Salzentzug eintritt. In der praktischen Elektrodialyseanwendung werden die einzelnen Zellen kontinuierlich mit einer verdünnten und einer konzentrierten Lösung durchspült. Für die Wirtschaftlichkeit des Verfahrens ist es von besonderer Bedeutung, daß die Strömungsgeschwindigkeit in den beiden Zellen möglichst gleichmäßig ist, so daß keine Konzentrationspolarisation an den Membranoberflächen auftreten kann. Weiterhin muß ein Übertritt der konzentrierten Lösung durch Undichtigkeiten der durch die Ionenaustauschermembranen getrennten Kammern in die verdünnte Lösung vermieden werden. Daher stellt die Konstruktion der Kammern ein ganz erhebliches Problem bei dem Bau einer Elektrodialyseanlage dar. Bei den meisten heute eingesetzten Elektrodialyseanlagen werden die Membranen durch jeweils einen Kunststoffrahmen voneinander getrennt. Die Kunststoffrahmen sind mit Löchern für die Zufuhr der entsalzten und der konzentrierten Lösung versehen. Die Membranen werden auf den Rahmen mechanisch abgedichtet. Da die einzelnen Kammern für konzentrierte und entsalzte Lösung alternierend in einem Zellpaket angeordnet sind, muß die Zufuhr des Konzentrats bzw. der entsalzten Lösung ebenfalls alternierend in die Zelle erfolgen.

Im allgemeinen erfolgt die Anströmung einer Zelle diagonal in einer Ecke der Zelle und die Ableitung der Lösung erfolgt an der gegenüberliegenden Seite der Zelle, so daß der Strom des Konzentrats und der entsalzten Lösung auf beiden Seiten der Membran genau entgegengesetzt geführt wird.

Dies führt dazu, daß die Strömungsverteilung in den Kammern nicht optimal ist und sich Zonen geringer Durchmischung und damit erhöhter Konzentrationspolarisation ausbilden. Außerdem sind durch die unterschiedliche Anströmung die Druckabfälle in den Kammern mit der konzentrierten und der entsalzten Lösung nicht immer gleich und dadurch entstehen Druckdifferenzen zwischen den Zellen. Dies führt zu einer zusätzlichen Belastung der Membran und unter Umständen zu einer Veränderung der Zellgeometrie. Außerdem treten bei einer mechanischen Abdichtung der meist an der Oberfläche rauhen Membranen auf den Zellrahmen häufig Leckagen auf, die zu einem Austritt der Lösung aus dem Zellpaket oder aber auch zu einem Übergang der Lösung aus der konzentrierten in die entsalzte Lösung führen können. Alle diese Effekte beeinflussen die Wirtschaftlichkeit des Verfahrens erheblich.

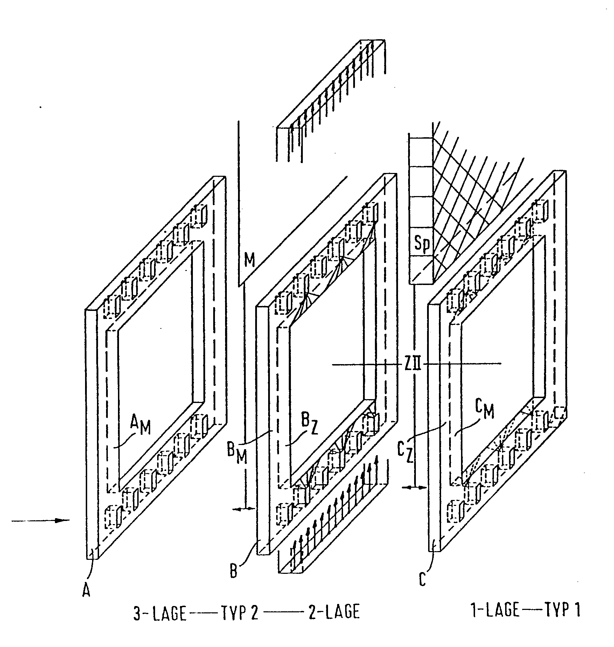

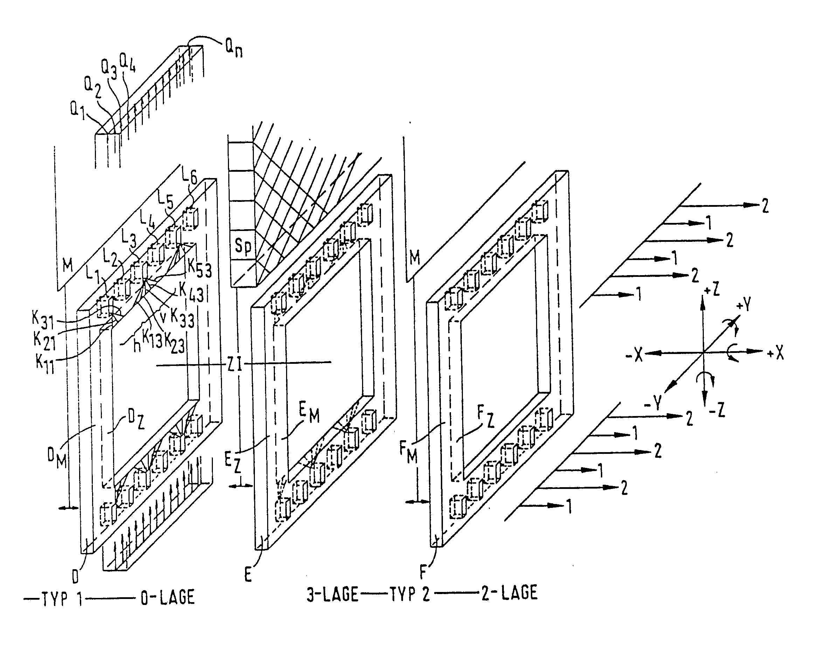

Die FR-A-1 445 634 beschreibt ein Elektrodialyse-Zellpaket, bei dem die Geometrie der Zelle durch Zusammenlegung der beiden Seitenteile 11 + 12 gemäß Fig. 3 gebildet wird. Dabei werden die Halbrahmen in der Y-Z-Ebene zusammengelegt. Durch das Zusammenlegen der einzelnen Halbrahmen ergibt sich ein Einlauf und ein Auslauf für die Lösung, die durch die Zelle fließen soll. Es kann also nur eine Lösung durch die Zelle fließen.

Die GB-A-860 468 beschreibt ein Zellpaket mit geometrisch gleichen Zellrahmen. Das Elektrodialyse-Zellpaket gemäß vorliegender Erfindung weist im Unterschied dazu ein anderes Durchströmungssystem, ein anderes Zellanströmungssystem und einen anderen geometrischen Zellrahmenaufbau (Spiegelsymmetrie zur Y-Achse) auf.

Ziel der vorliegenden Erfindung ist die Entwicklung einer Elektrodialysezelle, die eine optimale Anströmung der verdünnten und konzentrierten Lösung gestattet und gleichzeitig eine Leckage des Zellpaketes nach außen hin sowie einen Übertritt der konzentrierten Lösung in die Kammer mit der verdünnten Lösung zuverlässig verhindert.

Diese Aufgabe wurde erfindungsgemäß dadurch gelöst, daß zweiteilige Membranrahmen entwickelt wurden, auf denen auf einer Seite die jeweils zugehörige Membran fest aufgeklebt ist (Membranseite), während durch Aufeinanderlegen der jeweiligen anderen Seiten der Membranrahmen (Zellseite) zwischen den aufgeklebten Membranen eine abgeschlossene Kammer entsteht. Durch das Aneinanderreihen von mehreren Membranrahmen bildet sich eine Reihe von Kammern, die aus jeweils zwei Zellrahmen gebildet werden und in alternierender Reihenfolge parallel von einer entsalzten und einer konzentrierten Lösung durchströmt werden. Alle Zellrahmen besitzen die gleiche Dicke und damit die gebildeten Kammern die gleichen geometrischen Abmessungen. Bei gleichen Durchsatzmengen tritt in allen Kammern der gleiche Druckverlust auf, so daß zwischen zwei Kammern über die Membran kein Druckgefälle besteht. Weiterhin sind die Zellrahmen so konstruiert, daß sie sowohl für die Bildung der Kammern mit der konzentrierten als auch der Kammern mit der verdünnten Lösung benutzt werden können.

Gegenstand der Erfindung ist demnach ein Elektrodialyse-Zellpaket bestehend aus derart in alternierender Reihenfolge in einer Richtung (X-Achse) aneinandergereihten, gleiche geometrische Abmessungen aufweisenden Zellrahmen (A, B, C, D, . . .) und Membranen (M), daß jeweils zwei mit den Zellseiten ($A_z$, $B_z$, $C_z$, $D_z$ . . .) zugekehrte Zellrahmen eine abgeschlossene Zelle (Z I, Z II, . . .) bilden und auf den jeweiligen anderen Seiten, den Membranseiten ($A_M$, $B_M$, $C_M$, $D_M$, . . .), die zugehörige Membran aufliegt, wobei in zwei sich gegenüberliegenden Rahmenteilen eines in einer Y-Z-Ebene liegenden Zellrahmens ein diese Rahmenteile in X-Richtung durchdringendes Durchströmungssystem von Löchern ($L_i$) gerader Anzahl spiegelsymmetrisch zur Y-Achse angeordnet ist, und jedes zweite Loch auf der Zellseite des Zellrahmens ein zur jeweiligen Zelle führendes, fächerartiges Zellanströmsystem (h, v) von kanalartigen Vertiefungen aufweist, und die einzelnen Zellrahmen durch entsprechende Drehungen um die X-, Y- oder Z-Achse so einander zugeordnet sind, daß unabhängige Kreisläufe (1, 2) für konzentrierte und verdünnte Lösungen entstehen und das Zellanströmsystem eine parallele Strömung in den Zellen ermöglicht.

Der Aufbau des Zellrahmens ist im einzelnen in der Abbildung dargestellt und an dem folgenden Beispiel erklärt:

1.  Begriffsdefinitionen und Beschreibung der einzelnen Komponenten des Systems.

1.1  Zellrahmen:

Diese Rahmen werden mit A, B, C, D, . . . bezeichnet.
Die Rahmen bestehen aus Kunststoff und haben eine gleichmäßige Dicke — je nach Einsatzanforderung — von 0,5—5,0 mm. Die Breite der die Rahmen bildenden Seitenteile ist den Erfordernissen der zu übernehmenden Funktionen angepaßt und außerdem abhängig von der Gesamtrahmengröße. Sie bewegt sich im Bereich von einigen Millimetern bis mehreren Zentimetern.

1.2  Membranseite des Zellrahmens

Als Membranseite des Zellrahmens wird die Seite bezeichnet, auf der die Membran aufliegt.
Die Flächen der Membranseite sind absolut plan und eben. Sie können speziell für die Auflage der Membran behandelt werden. Die Membranseiten des Zellrahmens sind mit $A_M$; $B_M$; $C_M$; . . . bezeichnet.

1.3  Zellseite des Zellrahmens

Diese Seite des Zellrahmens ist der Zelle zugewandt und wird mit $A_z$; $B_z$; $C_z$ . . . bezeichnet. Die Flächen der Zellseite sind plan und eben. Diese Seite des Zellrahmens nimmt Teile des mit $K_{ij}$ und $L_i$ bezeichneten Zellanströmungssystems auf (i, j = 1, 2, 3 . . . n).

1.4  Durchströmungssystem

Dieser Begriff bezeichnet ein System von Löchern $L_i$, das in sich gegenüberliegenden Seiten des Zellrahmens spiegelsymmetrisch zur Y-Achse angeordnet ist. Die einzelnen Löcher haben eine den Strömungsanforderungen angepaßte geometrische Form und sind mit gleichem Abstand voneinander über die jeweilige Länge des Seitenteiles derart verteilt, daß die Achsen der äußeren Löcher $L_1$ und $L_{2xn}$ die Verlängerungen der seitlichen Innenraumbegrenzungen des Zellrahmens darstellen. Die Strömung durchdringt die Zellrahmen in diesem System senkrecht zur Rahmenebene. Es befindet sich stets eine gerade Anzahl von Löchern in den betreffenden Seitenteilen, so daß den zwei getrennten hydraulischen Kreisläufen jeweils die gleiche Anzahl von Löchern zugeordnet werden können.

1.5  Normierte Lage des Zellrahmen — O-Lage

Unter normierter Lage eines Zellrahmens wird folgendes verstanden: Der Rahmen liegt in der Y-Z-Ebene. Die Membranseite $D_M$ des Rahmens zeigt in −X-Richtung, die Zellseite des Rahmens $D_Z$ in +X-Richtung. Die Durchströmungssysteme sind in den Seitenteilen des Rahmens, die in +Z- und −Z-Richtung liegen, angeordnet.

1.6  Normierung des Durchströmungssystems

Der Zellrahmen liegt in normierter Lage. Die Ausbreitung des Durchströmungssystems liegt dann in Y-Achsenrichtung, wobei die Bezeichnung der einzelnen Löcher des Systems fortlaufend mit aufsteigenden Y-Werten erfolgt.
Die Bezeichnung der Löcher ist dann $L_1$; $L_2$; $L_3$ . . . $L_{2n}$ (n = 1, 2, 3 . . .).
Allen Löchern mit ungeradem Index — so also $L_1$; $L_3$; $L_5$ . . . $L_{2n-1}$ wird der hydraulische Kreislauf 1 zugeordnet, allen Löchern mit geradem Index — so also $L_2$; $L_4$ . . . $L_{2n}$ wird der hydraulische Kreislauf 2 zugeordnet.

1.7  Zellanströmungssystem

Das Zellanströmungssystem $K_{ij}$ befindet sich auf der Zellseite des Zellrahmens und stellt zunächst die im Zellrahmen hydraulisch noch undefinierte Verbindung der einem Kreislauf zugeordneten Löchern $L_i$ mit dem Rahmeninnenraum dar, und zwar derart, daß ausgehend von einem Loch $L_i$ ein fächerartiges System von kanalartigen Vertiefungen mit hydraulisch abgestimm-

ten Querschnitten die entsprechende Innenraumbegrenzungslinie des Zellrahmens in gleichen Abständen schneidet. Das von einem Loch $L_i$ ausgehende fächerartige Kanalsystem besteht immer aus einer ungeraden Anzahl von Kanälen, wobei im allgemeinen ein Kanal in der Mittelachse des Loches $L_i$ verläuft. Die von dem Loch $L_i$ ausgehenden Kanäle werden mit $K_{1i}$; $K_{2i}$ ... $K_{2n+1i}$ in Richtung aufsteigender Y-Koordinaten bezeichnet.

Der Fächer der Kanäle ist im allgemeinen spiegelsymmetrisch zur Lochmittelachse angeordnet. Ein solches spiegelsymmetrisches System wird als volles System v bezeichnet. Fehlt eine Seite eines vollen Systems, so wird dieses System als halbes System h bezeichnet, wobei der Kanal in der Mittelachse immer anwesend ist.

### 1.8 Normierung des Zellanströmungssystems

Der Zellrahmen liegt in normierter Lage. Dann geht von Loch $L_1$ ein halbes Anströmungssystem aus, von Loch $L_3$ ein ganzes, von Loch $L_5$ ein ganzes etc. Auf Grund der Symmetrie des Durchströmungssystems um die Y-Achse, ist auch das Zellanströmungssystem in den gegenüberliegenden Seitenteilen spiegelsymmetrisch um die Y-Achse. War das Durchströmungssystem um die Z-Achse noch spiegelsymmetrisch, so ist das Zellanströmungssystem aufgrund seiner oben beschriebenen Anordnung um diese Z-Achse asymmetrisch.

### 1.9 Zellrahmenlagen

### 1.9.1 Normierte Lage oder O-Lage

### 1.9.2 1-Lage

Diese Lage entsteht aus der O-Lage durch eine 180°-Drehung des Zellrahmens um die Z-Achse.

### 1.9.3 2-Lage

Diese Lage entsteht aus der O-Lage durch eine 180°-Drehung des Zellrahmens um die X-Achse.

### 1.9.4 3-Lage

Diese Lage entsteht aus der O-Lage durch eine 180°-Drehung des Zellrahmens um die Y-Achse.

### 1.10 Membranrahmen

Ein Membranrahmen besteht aus 3 Komponenten:
1. Der Membran M
2. Zweier Zellrahmen unterschiedlicher Lage.

Ein Membranrahmen wird in folgender Weise zusammengesetzt:

1. Ein Zellrahmen befindet sich in O-Lage. Auf der Membranseite dieses Rahmens wird die Membran M mittels eines speziell entwickelten Haftklebers befestigt.

2. Auf diese unter 1. dargestellte Kombination wird sodann die Membranseite eines Zellrahmens in 1-Lage mit der Membran wiederum mittels o. ä. Haftklebers befestigt.

Es ergeben sich definitionsgemäß 2 verschiedene Membranrahmentypen aufgrund der 2 möglichen Lagekombinationen:

Typ 1:     Lage 1 — Lage O
Typ 2:     Lage 3 — Lage 2

### 1.11 Zellenaufbau

Eine Zelle entsteht nunmehr durch geeignetes Aufeinanderlegen der einzelnen Membranrahmentypen, und zwar in folgender Weise:

1. Auf die Zellseite in O-Lage des Membranrahmentyps 1 wird die Zellseite in 3-Lage des Membranrahmensystems 2 gelegt. Es entsteht hier eine Zelle, die mit Z I bezeichnet wird.

2. Eine weitere Zelle, die mit Z II bezeichnet werden soll, entsteht durch das Aufeinanderlegen der Zellseite in 1-Lage des Membranrahmentyps 1 auf die Zellseite in 2-Lage des Membranrahmentyps 2.

Die planen Flächen der Zellseiten der einzelnen Membranrahmen werden nunmehr mit einem die innere wie äußere Dichtigkeit gewährleistenden Druck aufeinandergepreßt — sie wirken im Verbund nunmehr als Dichtungen.

Das im Membranrahmen noch hydraulisch undefinierte Zellanströmungssystem $K_{ij}$ ergibt nun — derartig aufeinandergelegt — aufgrund seiner geometrischen Ausbildung hydraulisch genau definierte Zellanströmungsquerschnitte $Q_i$, die gleichmäßig über die Ein- bzw. Ausströmungsseite verteilt sind.

Durch die zur Z-Achse asymmetrische Ausbildung des Zellanströmungssystems und durch die o. g. Anordnung der einzelnen Membranrahmen ist nun Zelle Z I mit dem hydraulischen Kreislauf 1 und Zelle II mit dem hydraulischen Kreislauf 2 verbunden. Als Membranabstandshalter und um für eine prozeßtechnisch wünschenswerte Turbulenz in der Zellströmung zu sorgen, wird ein sog. Spacer — mit Sp bezeichnet — in die Zellen eingelegt. Dieser Spacer besteht aus Kunststoff und hat eine seiner Funktionen entsprechende Ausbildung. Er kann als einzelnes Bauteil Bestandteil der Zelle sein, kann aber auch in die jeweiligen Zellrahmen integriert sein.

**Patentansprüche**

1. Elektrodialyse-Zellpaket bestehend aus derart in alternierender Reihenfolge in einer Richtung (X-Achse) aneinandergereihten, gleiche geometrische Abmessungen aufweisenden Zellrahmen (A, B, C, D, . . .) und Membranen (M), daß jeweils zwei mit den Zellseiten ($A_z$, $B_z$, $C_z$, $D_z$ . . .) zugekehrte Zellrahmen eine abgeschlossene Zelle (Z I, Z II, . . .) bilden und auf den jeweiligen anderen Seiten, den Membranseiten ($A_M$, $B_M$, $C_M$, $D_M$, . . .), die zugehörige Membran aufliegt, wobei in zwei sich gegenüberliegenden Rahmenteilen eines in einer Y-Z-Ebene liegenden Zellrahmens ein diese Rahmenteile in X-Richtung durchdringendes Durchströmungssystem von Löchern ($L_i$) gerader Anzahl spiegelsymmetrisch zur Y-Achse angeordnet ist, und jedes zweite Loch auf der Zellseite des Zellrahmens ein zur jeweiligen Zelle führendes, fächerartiges Zellanströmsystem (h, v) von kanalartigen Vertiefungen aufweist, und die einzelnen Zellrahmen durch entsprechende Drehungen um die X-, Y- oder Z-Achse so einander zugeordnet sind, daß unabhängige Kreisläufe (1, 2) für konzentrierte und verdünnte Lösungen entstehen und das Zellanströmsystem eine parallele Strömung in den Zellen ermöglicht.

2. Elektrodialyse-Zellpaket nach Anspruch 1, dadurch gekennzeichnet, daß innerhalb der einzelnen Zellen Membranabstandshalter (Sp) angeordnet sind.

**Claims**

1. An electrodialyses cell assembly consisting of cell frames (A, B, C, D, . . .) and membranes (M) having equal geometrical dimensions and being arranged in an alternating sequence in one direction (X axis) so that each two cell frames with their cell surfaces ($A_z$, $B_z$, $C_z$, $D_z$, . . .) facing one another form a closed cell (Z I, Z II, . . .), and the respective membrane sits on the respective opposite surfaces, i. e. the membrane surfaces ($A_M$, $B_M$, $C_M$, $D_M$, . . .), a throughflow system of an even number of holes ($L_i$) being arranged mirror-symmetrically with respect to the Y axis in two frame parts facing each other of a cell frame positioned in a Y-Z plane which throughflow system penetrates said frame parts in the X direction, and every other hole having a fanshaped cell-feeding flow system (h, v) leading to the cell of channel-type depressions on the cell surface of the cell frame, and the individual cell frames being arranged by appropriate rotations around the X, Y or Z axes in such relations to one another that independent circulaton paths (1, 2) for concentrated and diluted solutions are formed and the cell-feeding flow system enables a parallel flow to occur in the cells.

2. The electrodialysis cell assembly according to claim 1, characterized in that membrane spacers (Sp) are provided within the individual cells.

**Revendications**

1. Pile de cellules pour électrodialyse, comportant des cellules constituées par un ensemble de cadres (A, B, C, D, . . .) et de membranes (M) qui présentent les mêmes dimensions géométriques, et sont alignés alternativement l'un contre l'autre en rangée dans une direction déterminée (axe X), de telle façon que chaque groupe de deux cadres en regard l'un de l'autre par leurs faces correspondantes ($A_z$, $B_z$, $C_z$, $D_z$, . . .), appelées chacune »face de la cellule«, constitue une cellule fermée (Z I, Z II, . . .), alors que la membrane associée à chaque cadre est appliquée sur celui-ci sur sa face opposée, appelée »face de la membrane« ($A_M$, $B_M$, $C_M$, $D_M$, . . .) chaque cadre ainsi disposé dans un plan Y-Z comportant des trous de passage ($L_i$), ménagés symétriquement et en nombre égal de part et d'autre de l'axe Y, de manière à constituer pour chaque cellule, entre les deux cadres en regard l'un de l'autre, un système d'écoulement dans le sens de l'axe X, un trou sur deux de chaque cadre, sur la face de la cellule, comportant un système de passages en éventail (h, v), constitué, d'évidements en forme de canaux qui communiquent avec la cellule considérée, et les différents cadres sont disposés l'un par rapport à l'autre, avec rotation par rapport aux axes X, Y ou Z de telle manière qu'on réalise des trajets de circulation indépendants (1, 2) pour des solutions concentrées et diluées, et que le système de passages en éventail communiquant avec chaque cellule permet une circulation en parallèle dans celle-ci.

2. Pile de cellules pour électrodialyse selon la revendication 1, caractérisée en ce qu'elle comporte des éléments d'écartement (Sp) disposés dans chaque cellule, pour définir l'écartement des membranes.

3-LAGE——TYP 2——2-LAGE                    1-LAGE——TYP 1